# EUROPÄISCHE PATENTSCHRIFT

(11) **EP 0 984 877 B1**
(45) Veröffentlichungstag und Bekanntmachung des Hinweises auf die Patenterteilung: **14.12.2005**
(21) Anmeldenummer: 99919110.9
(22) Anmeldetag: 22.03.1999
(51) Int. Cl.: B60S 1/38, C23C 16/30, C23C 16/04

(54) **WISCHERGUMMI MIT EINER SCHUTZSCHICHT**
WIPER BLADE RUBBER WITH A PROTECTIVE LAYER
RACLETTE D'ESSUIE-GLACE A COUCHE PROTECTRICE

(30) Priorität: 02.04.1998 DE 19814804
(43) Veröffentlichungstag der Anmeldung: 15.03.2000
(73) Patentinhaber: ROBERT BOSCH GMBH, 70442 Stuttgart (DE)
(72) Erfinder: RAUSCHNABEL, Johannes, D-70197 Stuttgart (DE); FORGET, Jeanne, D-70195 Stuttgart (DE); VOIGT, Johannes, D-71229 Leonberg (DE)
(86) Internationale Anmeldenummer: PCT/DE1999/000806
(87) Internationale Veröffentlichungsnummer: WO 1999/051473

(56) Entgegenhaltungen:
- EP-A- 0 264 227
- EP-A- 0 410 401
- WO-A-85/04601
- DATABASE WPI Section Ch, Week 8522 Derwent Publications Ltd., London, GB; Class A14, AN 85-131087 XP002112335 & JP 60 067655 A (NIPPON OIL SEAL IND CO LTD), 18. April 1985 (1985-04-18)
- PATENT ABSTRACTS OF JAPAN vol. 097, no. 009, 30. September 1997 (1997-09-30) & JP 09 125253 A (NISSIN ELECTRIC CO LTD), 13. Mai 1997 (1997-05-13)
- PATENT ABSTRACTS OF JAPAN vol. 098, no. 006, 30. April 1998 (1998-04-30) & JP 10 035418 A (FUKOKU CO LTD), 10. Februar 1998 (1998-02-10)

## Beschreibung

### Stand der Technik

Die Erfindung geht aus von einem Wischergummi mit einer Schutzschicht nach dem Oberbegriff des Anspruchs 1.

Bekannte Scheibenwischer besitzen einen Wischarm, der aus einem auf einer Antriebsachse befestigten Befestigungsteil, einem mit diesem über ein Kniegelenk verbundenen Gelenkteil und aus einer sich an das Gelenkteil starr anschließenden Wischstange aufgebaut ist. Ferner besitzt der Scheibenwischer ein Wischblatt, das ein Tragbügelsystem und eine von diesem gehaltenen Wischergummi aufweist. Das Wischblatt ist am Wischarm angelenkt, indem ein hakenförmiges Ende der Wischstange zwischen zwei Seitenwangen des Tragbügelsystems greift und einen Gelenkbolzen umfaßt. Das so gebildete Gelenk führt das Wischblatt mit dem Wischergummi über eine Kraftfahrzeugscheibe, wobei das Gelenkteil und das Tragbügelsystem es ermöglichen, daß sich der Wischergummi einer Wölbung der Kraftfahrzeugscheibe anpaßt. Ein erforderlicher Anpreßdruck des Wischergummis auf der Kraftfahrzeugscheibe wird mit mindestens einer Zugfeder erreicht, die das Befestigungsteil und das Gelenkteil gemeinsam mit der Wischstange über das Kniegelenk verspannt.

Der Wischergummi besteht aus einem Elastomer, z.B. einem Natur- oder Synthesekautschuk, oder Athylenpropylen. Er hat eine Kopfleiste, die über einen Kippsteg mit einer auf der zu wischenden Scheibe aufliegenden Wischlippe verbunden ist. Durch den Kippsteg kann die Wischlippe im Umkehrpunkt der Wischbewegung in die entgegengesetzte Richtung umklappen, so daß sie stets einen günstigen Winkel zur Windschutzscheibe einnimmt. Wird der Scheibenwischer betätigt, gleitet der Wischergummi mit der Wischlippe über die Kraftfahrzeugscheibe, wobei er sich durch Reibung zwischen der Wischlippe und der Windschutzscheibe abnutzt. Ferner wirken Umwelteinflüsse auf den Wischergummi, wie beispielsweise Temperaturschwankungen, UV-Strahlung, Salzwasser, Abgase usw., die zu einer frühzeitigen Werkstoffalterung und einem verstärkten Verschleiß führen können.

Grundsätzlich kann der Verschleiß durch eine bessere Gleiteigenschaft und damit geringere Reibung und/oder durch einen härteren Wischergummi reduziert werden. Aus der DE 26 23 216 sind Wischergummis bekannt, die mit einem naßchemischen Härteverfahren zunächst mit Chlor oder Brom halogeniert und anschließend mit einer stark oder mäßig alkalischen Lösung bei Temperaturen bis zu 100° C behandelt wurden.

Nachdem der Wischergummi beispielsweise durch Extrusion hergestellt ist, besitzt dieser eine glatte, günstige Oberfläche. Von dem naßchemischen Härtevorgang wird der Wischergummi insgesamt erfaßt, so daß sich seine Werkstoffeigenschaften auch dort verändern, wo es nicht erforderlich oder gar unerwünscht ist. Ferner werden die Mikrostruktur und Makrostruktur des Wischergummis verändert, beispielsweise durch Chlor und Wärme. Der Wischergummi wird in der Regel rauer und spröder, wodurch er schlechter auf der Kraftfahrzeugscheibe anliegt und schlechtere Wischeigenschaften erhält. Ferner besteht die Gefahr, dass kleinere und größere Bestandteile beim Wischen über die Windschutzscheibe aus dem Wischergummi herausbrechen. Für eine gute Reinigungsqualität sollte ferner die Wischlippe des Wischergummis beim Richtungswechsel schnell und leicht ohne großen Widerstand umklappen. Durch einen härteren und spröderen Werkstoff wird der Widerstand im Werkstoff jedoch erhöht, der Umklappvorgang verhindert oder zumindest verzögert und das Wischblatt neigt zum Rattern.

Ferner sind aus der BE 84 8 964 A Wischergummis bekannt, die nach einem Härteverfahren mit einer Schicht überzogen sind, die weicher ist als das Grundmaterial und daher nicht sehr verschleißfest ist.

Aus den Patent Abstracts of Japan Bd. 097, Nr. 009, 30. September 1997 (1997-09-30) und JP 09 125253 A (Nissin Electric CO LTD, 13. Mai 1997 (1997-05-13) ist ein Verfahren zum Beschichten eines Wischergummis bekannt. Die Beschichtung erfolgt durch ein PVD-Verfahren, bei dem die Generierung und Aktivierung des dampfförmigen Beschichtungsmaterials thermisch und plasmagestützt erfolgt und einen Kohlenstofffilm mit einer vorzüglichen Gleiteigenschaft auf der Wischergummioberfläche bildet.

Ferner ist aus der JP 60 067655 A und den entsprechenden Patent Abstracts of Japan, Bd. 009, Nr. 200 (C-298), 16. August 1985 (1985-08-16) und der Database WPI Section CH, Week 8522 Derwent Publications Ltd, London, GB; Class A14, AN 85-131087 XP002112335 ein Verfahren zum Beschichten eines Wischergummis bekannt, bei dem im ersten Schritt auf dem Grundmaterial teilweise oder ganz eine untere Schicht durch ein Hochfrequenzsputterverfahren gebildet wird, die Fluor enthält, und in einem zweiten Schritt ein weiterer Film auf die untere Lage gebildet wird aus einem Kunststoffgemisch, das ein oder mehrere der Komponenten Kupfer, Zink, Kohlenstoff, Glas, Molybdändisulfid oder Boronnitrid und Fluor enthält. Dadurch wird der Reibwiderstand stark reduziert.

Aus der EP-A-0 264 227 ist ein Wischergummi gemäß dem Oberbegriff der Anspruchs 1, wobei die Schutzschicht im dampfförmigen Zustand plasmaunterstützt aufgebracht wird und den Elastomer verschleißfester macht. Das Verfahren benutzt ein Vakuum von 0,1 Torr, eine elektrische Entladungsfrequenz von 20 KHz oder eine Hochfrequenz von beispielsweise 13,56 MHz und eine elektrische Entladungsleistung von 30 bis 120 mA bei 600 bis 700 V. Es wurden Schichtendicken auf EPDM-Werkstoff von 2 bis 2,8 µm und auf Urethangummi von 0,8 bis 3,6 µm erreicht.

### Vorteile der Erfindung

Schichten bzw. Schichtsysteme, die durch CVD-Prozesse (Chemical Vapour Deposition, Chemischer Dampfablagerungs-Prozeß) und/oder PVD-Prozesse (Physical Vapour Deposition, Physikalischer Dampfablagerungs-Prozeß) hergestellt wurden, können besonders dünn, geschlossen und hochvernetzt ausgeführt werden. Dünne Schichten können hart und trotzdem flexibel gestaltet werden. Bei Verformungen des Wischergummis bleibt die geschlossene Oberfläche erhalten. Die Schichten führen zu einer hohen chemischen Resistenz, indem keine aggressiven Schicht und den Wischergummi gelangen können, den Wischergummi angreifen und die Schicht abzulösen vermögen.
Ferner wird für dünne Schichten wenig Beschichtungsmaterial benötigt. Es fällt wenig Abfallmaterial an und es müssen geringe Mengen an Beschichtungsmaterial vorgehalten werden. Prozentual zur Schichtdicke kann ein guter Wirkungsgrad dadurch erreicht werden, daß die Kammer klein gehalten wird und die Kammerwände zur Verhinderung der Kondensation des Schichtmaterials beheizt werden. Chemisch aggressive Lösungsmittel sind nicht erforderlich. Bei den aufgebrachten Schichten gibt es keine zeitraubenden Trocknungs- bzw. Aushärtungszyklen. Die entsprechenden Beschichtungsverfahren sind umweltfreundlich, wirtschaftlich und eignen sich gut für eine Großserienproduktion.

Die Beschichtungsverfahren, bei denen Beschichtungsmaterialien in einen dampfförmigen Zustand versetzt oder in einem dampfförmigen Zustand verwendet, zur Oberfläche des zu beschichtenden Gegenstands befördert und auf diesem abgelagert werden, können in PVD-Verfahren und CVD-Verfahren unterteilt werden. Derartige Beschichtungsverfahren sind insbesondere bekannt, Siliziumscheiben für integrierte Halbleiterschaltungen zu beschichten (vgl.: Widmann, Dietrich: Technologie hochintegrierter Schaltungen, D. Widmann; H. Mader; H. Friedrich. - 2 Aufl. Springer, 1996, S. 13-34). Die CVD-Verfahren, auch als Gasphasenabscheidungs-Verfahren bezeichnet, sind durch chemische Reaktionen geprägt, d.h. die verwendeten Beschichtungsmaterialien reagieren auf der zu beschichtenden Oberfläche in einer chemischen Reaktion zu einer Schicht. Die PVD-Verfahren sind dagegen in erster Linie durch physikalische Abläufe geprägt, wie beispielsweise zerstäuben einer Kathode, wobei jedoch keine klare Grenze zwischen den Verfahren gezogen werden kann. Die chemische Reaktion kann durch Fragmentierung der Dampfmolekühle im Plasma mit thermischer, elektrischer oder Laser-Unterstützung erfolgen. Dabei können die abgeschiedenen Schichten durch einen Beschuß mit aktivierten bzw. geladenen Teilchen nachverdichtet werden.

In der Ausgestaltung der Erfindung wird die Schutzschicht von einem Schichtsystem gebildet. Die Schichteigenschaften sind innerhalb einer insgesamt dünnen Schicht verschiedenen Anforderungen angepaßt. Im inneren Bereich am Wischergummi ist die Schutzschicht elastisch-weich, den Eigenschaften des Wischergummis angepaßt und nach außen z.B. hart, verschleißfest und besitzt gute Gleiteigenschaften.

Durch den Übergang von einer weichen zu einer dünnen, harten Schicht in einem insgesamt dünnen Schichtsystem, ist dieses in sich elastisch, beeinflußt nur geringfügig die Elastizität des Wischergummis und ist mit diesem haftfest verbunden. Das Schichtsystem platzt nicht ab, wenn der Wischergummi verformt wird und ist chemisch resistent.

Bei verschiedenen Randbedingungen in der Fertigung ist es von Vorteil, daß das Schichtsystem erfindungsgemäß aus einer Multilagenschicht aufgebaut ist, d.h., durch mehrere dünne, von den Stoffeigenschaften geringfügig abweichende Schichten übereinander.

Die Multilagenschicht kann gleichzeitig die nach außen abschließende, harte, verschleißfeste Schicht bilden. Möglich ist auch, daß die verschleißfeste, harte Schicht separat, d.h. als abgesetzte Stufe aufgebracht wird. In einer Ausgestaltung der Erfindung wird vorgeschlagen, daß das Schichtsystem abschließend zusätzlich eine trockenschmierende und/oder hydrophobe Schicht hat. Bewährt haben sich Schichten mit einem Wasserbenetzungsrandwinkel zwischen 60 Grad und 150 Grad, vorzugsweise über 90 Grad, wodurch in Kombination mit einer hydrophilen Scheibenoberfläche ein vorteilhaftes Wischverhalten eingestellt werden kann.

Das Schichtsystem kann auch hinsichtlich Härte und Elastizität homogen aufgebaut sein. In diesem Fall sollte die Verschleißschutzschicht exzellente Gleiteigenschaften besitzen, eine hohe Elastizität und eine gute Haftung auf der Gummioberfläche aufweisen. Durch die verbesserten Gleiteigenschaften im Vergleich mit einem unbehandelten oder naßchemisch behandelten Wischergummi kann auch der Verschleiß herabgesetzt werden. Vorteil dieser homogenen Beschichtung ist gegenüber der Gradientenschicht oder der Multilagenschicht der prozeßtechnisch geringere Aufwand und die damit niedrigeren Kosten.

Als Beschichtungsmaterialien eignen sich besonders halogen-, silizium-, kohlenstoffhaltige und/oder metallorganische Materialien bzw. Monomere, d.h. niedermolekulare, vernetzbare Stoffe, wobei der Kohlenstoff-, Stickstoff-, Sauerstoff-, Fluor- und/oder Metallgehalt von innen nach außen variiert, daß die Härte bzw. die Verschleißfestigkeit im Schichtsystem zunimmt. Eine günstige Multilagenschicht wird beispielsweise mit einem siliziumhaltigen Gemisch erreicht, bei dem von innen nach außen der Kohlenstoffgehalt, der Sauerstoffgehalt und/oder der Halogengehalt zunimmt. Für die nach außen abschließende Schicht eignen sich besonders kohlenstoffreiche, halogenhaltige und/oder metallhaltige Verbindungen, für deren Herstellung sich insbesondere fluorhaltige Gase, sauerstoffarme Siloxan-Monomere und Kohlenwasserstoff-Gase bewährt haben. Die Schichtoberfläche erhält dadurch die gewünschte hydrophobe und/oder trockenschmierende Eigenschaft und damit gute Gleiteigenschaften, insbesondere auf hydrophilen Windschutzscheiben. Bei einer oxidischen oder nitridischen Multilagenschicht oder Gradientenschicht kann ein höherer Reibkoeffizient entstehen, wodurch eine zusätzliche, die Gleiteigenschaft verbessernde hydrophobe, abschließende Schicht besonders von Vorteil ist. Die abschließende, hydrophobe Schicht bleibt im Gegensatz zu naßchemischen Imprägnierungen durch kovalente Bindungen mit der Multilagenschicht oder der Gradientenschicht lange erhalten.

Um den Halt des gesamten Schichtsystems zu verbessern, wird in einer Ausgestaltung der Erfindung vorgeschlagen, daß das Schichtsystem über eine metallische, organische und/oder silizium-stickstoffhaltige Haftvermittlerschicht mit dem Wischergummi verbunden ist. Möglich ist auch, daß der Wischergummi thermisch, photochemisch und/oder plasmaunterstützt gereinigt bzw. vorbehandelt wird, bevor das Schichtsystem aufgebracht wird, beispielsweise mit halogen-, sauerstoff- und/oder stickstoffhaltigen Gasen.

Die Schichteigenschaften innerhalb dem Schichtsystem können wie beschrieben mit verschiedenen Stoffgemischen eingestellt werden. Ferner besteht die Möglichkeit durch verschiedene Beschichtungsverfahren unterschiedliche Stoffstrukturen und damit unterschiedliche Stoffeigenschaften und Schichteigenschaften zu erzielen. Die Beschichtungsmaterialien können durch Wärme, durch ein Plasma und/oder durch Laser in einen dampfförmigen Zustand versetzt und/oder in einem bereits dampfförmigen Zustand in ihren Bestandteilen weiter aufgespalten werden, beispielsweise durch Plasmaspritzen, Kathodenzerstäubung usw. Die inneren weichen, den Eigenschaften des Wischergummis angepaßten Schichten des Schichtsystems können eine grobkörnigere Struktur besitzen, die beispielsweise bei Atmosphäre und/oder durch ein gering fragmentiertes Beschichtungsmaterial bzw. Monomer hergestellt ist. Die äußeren harten und verschleißfesten Schichten dagegen besitzen vorzugsweise amorphe feinkörnige, dichte Strukturen, die im Vakuum durch stark fragmentiertes Beschichtungsmaterial hergestellt ist.

In einer Ausgestaltung der Erfindung wird vorgeschlagen, daß die Schutzschicht mit einem laserunterstützten Verfahren nur in einem begrenzten Bereich beschichtet ist, mit dem er mit der Windschutzscheibe in Kontakt kommt. Durch einen oder mehrere Laser, beispielsweise Excimer-Laser, kann die Energie in einem örtlich begrenzten, exakt bestimmbaren Bereich eingebracht werden. Durch die örtlich begrenzte Schutzschicht wird der Wischergummi während der Beschichtung nur in sehr geringen Bereichen thermisch belastet. Die Elastizität des restlichen Wischergummis wird nicht beeinflußt, insbesondere nicht im Bereich des Kippstegs, wodurch der Umklappvorgang der Wischlippe durch die Beschichtung und das Schichtsystem nicht beeinflußt wird. Es wird wenig Beschichtungsmaterial und Energie benötigt.

Die Schutzschicht bzw. das Schichtsystem kann je nach Anwendungsfall verschieden dick ausgeführt werden. Besonders bewährt hat sich jedoch eine Dicke zwischen 200 nm und 2 µm.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen vergrößerten Ausschnitt eines nicht beanspruchten Wischergummis mit einer Gradientenschicht,
- Fig. 2: einen vergrößerten Ausschnitt eines erfindunsgemäßen Wischergummis mit einer Multilagenschicht und
- Fig. 3: einen Wischergummi mit einer vergrößert dargestellten Schutzschicht im Kontaktbereich mit einer Windschutzscheibe.

### Beschreibung der Ausführungsbeispiele

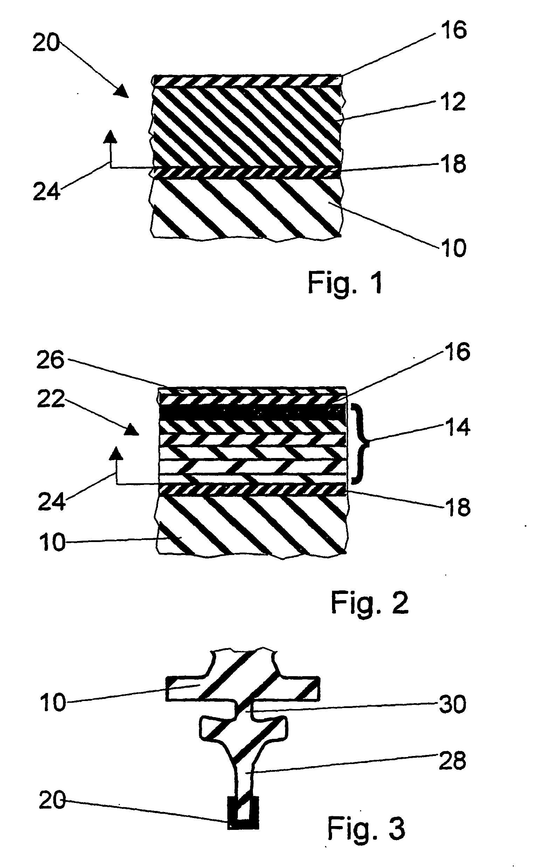

Fig. 1 zeigt einen vergrößerten Ausschnitt eines nicht beanspruchten Wischergummis 10 mit einem Schichtsystem 20. Um einen besseren Halt des Schichtsystems 20 zu erreichen, besitzt das Schichtsystem 20 eine metallische, organische und/oder siliziumstickstoffhaltige Haftvermittlerschicht 18, mit der es mit dem Wischergummi 10 verbunden ist. Auf die Haftvermittlerschicht 18 folgt eine Gradientenschicht 12 auf Siliziumbasis, innerhalb der die Stoffparameter bzw. Stoffeigenschaften, wie der Sauerstoffgehalt, Kohlenstoffgehalt und/oder der Metallgehalt entsprechend chemischen Gradienten in Richtung 24 zunehmen. Die Gradientenschicht 12 ist im inneren Bereich zum Wischergummi 10 elastisch-weich, den Eigenschaften des Elastomers des Wischergummis 10 angepaßt und nimmt in ihrer Härte und Verschleißfestigkeit innerhalb der Gradientenschicht 12 in Richtung 24 zu. Nach außen schließt das Schichtsystem 20 mit einer besonders verschleißfesten, hydrophoben, harten und dünnen und dadurch in sich flexiblen Schicht 16 ab, die beispielsweise besonders kohlenstoffhaltig, metallhaltig und/oder halogenhaltig ist. Durch das Schichtsystem 20 wird ein gleichmäßiger Übergang von dem elastisch-weichen Elastomer des Wischergummis 10 zu einer verschleißfesten Schicht 16 geschaffen. Die harten Schichtbereiche sind dünn und dadurch trotz hoher Härte flexibel. Möglich ist auch, daß die Gradientenschicht 12 unmittelbar auf dem Wischergummi 10 angeordnet ist und gleichzeitig die nach außen abschließende Schicht darstellt. Zusätzliche Arbeitsgänge und Beschichtungsmaterial für die Haftvermittlerschicht 18 und die zusätzliche Schicht 16 werden eingespart und das Schichtsystem wird kostengünstiger. Darüber hinaus ist es auch möglich, daß nur eine Schicht homogen abgeschieden worden ist, die keinen Gradienten besitzt. Dies vereinfacht den Abscheideprozeß und kann bereits zu einer deutlichen Verbesserung der Wischeigenschaften und der Verschleißresistenz führen.

In Fig. 2 ist num ein Schichtsystem 22 mit einer erfindungsgemäßen Mulitlagenschicht 14 dargestellt. Die Mulitlagenschicht 14 besteht aus mehreren dünnen, sich in ihren Stoffeigenschaften unterscheidenden Schichten. Die Härte der Schichten nimmt in Richtung 24 zu. wesentlich ist jedoch auch, daß die Schichten nicht kontinuierlich in ihrer Härte zunehmen, sondern beispielsweise weich, hart, weich, hart ausgeführt sind. Die weichen Schichten können daher als Spannungsausgleich dienen. Die Multilagenschicht 14 ist über einer Haftvermittlerschicht 18 mit dem Wischergummi 10 verbunden. Nach außen besitzt das Schichtsystem 22 eine harte, dünne Schicht 16 und eine zusätzliche Schicht 26, die hydrophob und/oder trockenschmierend ausgeführt ist und die Gleiteigenschaften des Schichtsystems 22 verbessert. Die Schicht 26 ist beispielsweise aus fluorhaltigen Gasen und sauerstoffarmen Siloxan-Monomeren hergestellt. Möglich ist auch, daß ein Schichtsystem allein durch die Multilagenschicht 14 gebildet wird.

In Fig. 3 ist ein Wischergummi 10 mit einem Kippsteg 30 und einer sich daran anschließenden Wischlippe 28 dargestellt. Im vorderen Bereich der Wischlippe 28, mit dem diese mit der Windschutzscheibe beim Wischvorgang in Kontakt kommt, ist eine Schutzschicht bzw. ein Schichtsystem 20 aufgebracht, vorzugsweise durch ein laserunterstütztes Verfahren. Der Wischergummi 10 ist im Bereich des Kippstegs 30 nicht beschichtet, wodurch die Umklappeigenschaften des Wischergummis 10 durch das Schichtsystem 20 und durch das Beschichtungsverfahren nicht beeinflußt werden. Die Schutzschicht wird vorzugsweise durch ein Schichtsystem 20 oder 22 gebildet, kann jedoch auch ausschließlich aus einer Schicht bestehen. Da die Verbreiterung (31) des Profils unterhalb des Kippstegs ebenfalls mit der Windschutzscheibe in Berührung kommen kann, ist in einer weiteren vorteilhaften Ausführung auch diese Verbreiterung (31) mitbeschichtet, nicht aber der Kippsteg.

Die Schutzschichten bzw. Schichtsysteme 20, 22 können abhängig von verschiedenen Einsatzbereichen unterschiedlich dick ausgeführt werden. Bewährt haben sich jedoch Schutzschichten zwischen 200 nm und 2 µm Dicke.

### Bezugszeichen

- 10: Wischergummi
- 12: Gradientenschicht
- 14: Multilagenschicht
- 16: Schicht
- 18: Haftvermittlerschicht
- 20: Schichtsystem
- 22: Schichtsystem
- 24: Richtung
- 26: Schicht
- 28: Wischlippe
- 30: Kippsteg

## Patentansprüche

1. Wischergummi (10) aus einem Elastomer mit einer Schutzschicht (22), die im dampfförmigen Zustand plasmaunterstützt aufgebracht wird und das Elastomer verschleißfester macht, **dadurch gekennzeichnet, dass** die Schutzschicht (22) eine Multilagenschicht (14) umfasst, die mehrere dünne, von den Stoffeigenschaften geringfügig voneinander abweichende Schichten aufweist, wobei die Multilagenschicht in ihrer Härte von innen nach außen zunimmt aber dass zum Spannungsausgleich weiche Schichten vorgesehen sind, so dass die Härte nicht Kontinuierlich zummint.

2. Wischergummi (10) nach Anspruch 2, **dadurch gekennzeichnet, dass** die Schutzschicht (22) nach außen eine harte, verschleißfeste Schicht (16) aufweist.

3. Wischergummi (10) nach Anspruch 2, **dadurch gekennzeichnet, dass** die Schutzschicht (22) abschließend eine hydrophobe und/oder trockenschmierende Deckschicht (26) aufweist.

4. Wischergummi (10) nach Anspruch 3, **dadurch gekennzeichnet, dass** die hydrophobe Schicht (26) einen Wasserbenetzungsrandwinkel zwischen 60 und 150 Grad aufweist.

5. Wischergummi (10) nach einem der vorhergehenden Ansprüche, **dadurch gekennzeichnet, dass** die Schutzschicht (22) aus halogen-, silizium-, kohlenstoffhaltigen und/oder metallorganischen Beschichtungsmaterialien besteht, wobei der Kohlenstoff-, Stickstoff-, Sauerstoff-, Halogen- und/oder Metallgehalt senkrecht zur Schutzschicht (22) variieren können.

6. Wischergummi (10) nach Anspruch 5, **dadurch gekennzeichnet, dass** bei der Schutzschicht (22) der Kohlenstoffgehalt, Sauerstoffgehalt und/oder Halogengehalt von innen nach außen zunehmen.

7. Wischergummi (10) nach einem der vorhergehenden Ansprüche, **dadurch gekennzeichnet, dass** die Schutzschicht (22) nach innen eine Haftvermittlerschicht (18) aufweist.

8. Wischergummi (10) nach einem der vorgehenden Ansprüche, **dadurch gekennzeichnet, dass** die Schutzschicht (22) nur in einem begrenzten Bereich vorgesehen ist, mit dem der Wischergummi (10) mit der Windschutzscheibe in Kontakt kommt.

9. Wischergummi (10) nach einem der vorhergehenden Ansprüche, **dadurch gekennzeichnet, dass** die Schutzschicht (22) zwischen 0,2 µm und 2 µm dick ist, bevorzugt 0,2 µm - 1 µm.

## Claims

1. Wiper blade rubber (10) composed of an elastomer with a protective layer (22) which is deposited in the vapour state under plasma assistance and makes the elastomer more resistant to wear, **characterized in that** the protective layer (22) comprises a multilayer structure (14) which has a plurality of thin layers differing slightly from one another in terms of the material properties, the multilayer structure increasing in its hardness from the inside to the outside, but **in that** soft layers are provided for tension regulation, with the result that the hardness does not increase continuously.

2. Wiper blade rubber (10) according to Claim 1, **characterized in that** the protective layer (22) has a hard, wear-resistant layer (16) to the outside.

3. Wiper blade rubber (10) according to Claim 2, **characterized in that** the protective layer (22) finally has a top layer (26) which is hydrophobic and/or has dry-film lubrication.

4. Wiper blade rubber (10) according to Claim 3, **characterized in that** the hydrophobic layer (26) has a water wetting angle of between 60 and 150 degrees.

5. Wiper blade rubber (10) according to one of the preceding claims, **characterized in that** the protective layer (22) is composed of halogen-, silicon-, carbon-containing and/or organometallic coating materials, with it being possible for the carbon, nitrogen, oxygen, halogen and/or metal content to vary perpendicularly with respect to the protective layer (22).

6. Wiper blade rubber (10) according to Claim 5, **characterized in that** the carbon content, oxygen content and/or halogen content increase from the inside to the outside in the protective layer (22).

7. Wiper blade rubber (10) according to one of the preceding claims, **characterized in that** the protective layer (22) has an adhesion-promoting layer (18) to the inside.

8. Wiper blade rubber (10) according to one of the preceding claims, **characterized in that** the protective layer (22) is provided only in a limited region with which the wiper blade rubber (10) comes into contact with the windscreen.

9. Wiper blade rubber (10) according to one of the preceding claims, **characterized in that** the protective layer (22) has a thickness of between 0.2 µm and 2 µm, preferably 0.2 µm - 1 µm.

## Revendications

1. Raclette d'essuie-glace (10) réalisée en élastomère muni d'une couche protectrice (22), cette couche étant appliquée par dépôt de vapeur assisté par du plasma et protège l'élastomère contre l'usure,
**caractérisée en ce que**
la couche protectrice (22) comprend une couche multiple (14) formée de plusieurs couches minces dont les caractéristiques de matière diffèrent légèrement l'une de l'autre, la couche multiple ayant une dureté augmentant de l'intérieur vers l'extérieur, des couches souples étant prévues pour compenser les tensions afin que la dureté n'augmente pas de manière continue.

2. Raclette d'essuie-glace (10) selon la revendication 2,
**caractérisée en ce que**
la couche protectrice (22) comporte une couche (16) résistant à l'usure, dure vers l'extérieur.

3. Raclette d'essuie-glace (10) selon la revendication 2,
**caractérisée en ce que**
la couche protectrice (22) comporte finalement une couche de couverture (26) hydrophobe et/ou lubrifiante à sec.

4. Raclette d'essuie-glace (10) selon la revendication 3,
**caractérisée en ce que**
la couche hydrophobe (26) a un angle limite mouillant compris entre 60° et 150°.

5. Raclette d'essuie-glace (10) selon l'une des revendications précédentes,
**caractérisée en ce que**
la couche protectrice (22) est une matière de revêtement à base d'halogène, de silicium ou de carbone et/ou métallo-organique, et la teneur en carbone, azote, oxygène, halogène et/ou métal varie perpendiculairement la couche protectrice (22).

6. Raclette d'essuie-glace (10) selon la revendication 5,
**caractérisée en ce que**
dans la couche protectrice (22), la teneur en carbone, la teneur en oxygène et/ou la teneur en halogène diminuent de l'intérieur vers l'extérieur.

7. Raclette d'essuie-glace (10) selon l'une des revendications précédentes,
**caractérisée en ce que**
la couche protectrice (22) a une couche d'accrochage (18) du côté intérieur.

8. Raclette d'essuie-glace (10) selon l'une quelconque des revendications précédentes,
**caractérisée en ce que**
la couche protectrice (22) n'est prévue que dans une plage limitée de la raclette (10) venant en contact avec le pare-brise.

9. Raclette d'essuie-glace (10) selon l'une quelconque des revendications précédentes,
**caractérisée en ce que**
la couche protectrice (22) a une épaisseur comprise entre 0,2 µm et 2 µm, de préférence entre 0,2 µm et 1 µm.
